# EUROPEAN PATENT APPLICATION

(11) **EP 4 470 677 A1**
(43) Date of publication of application: **04.12.2024**
(21) Application number: 23710080.5
(22) Date of filing: 24.01.2023
(51) Int. Cl.: B05B 12/00, B05B 13/00, B05B 14/00, B32B 37/00, H02K 1/00

(54) **METHOD AND APPARATUS FOR THE APPLICATION OF PARTICLE SIZED-CONTROLLED LIQUID COATINGS ON ROLLED SHEETS OF VARYING GEOMETRIES**

(30) Priority: 24.01.2022 MX 2022000979
(71) Applicant: Eurogroup Laminations S.p.A., 20021 Baranzate MI (IT)
(72) Inventor: FRANCHINI, Leonardantonio, SANTA ROSA JÁUREGUI, QUERÉTARO, 76220 (MX); ARANA COLLAZO, Eduardo, SANTA ROSA JÁUREGUI, QUERÉTARO, 76220 (MX); VILLALON, Mario Alejandro, SANTA ROSA JÁUREGUI, QUERÉTARO, 76220 (MX); MARTÍNEZ PEREYRA, Enrique, SANTA ROSA JÁUREGUI, QUERÉTARO, 76220 (MX); OCHOA RAMIREZ, Victor Hugo, SANTA ROSA JÁUREGUI, QUERÉTARO, 76220 (MX); SALAS ZUÑIGA, Roberto, SANTA ROSA JÁUREGUI, QUERÉTARO, 76220 (MX); RODRIGUEZ POLO, Adrian, SANTA ROSA JÁUREGUI, QUERÉTARO, 76220 (MX)
(74) Representative: Perani & Partners S.p.A.
(86) International application number: PCT/IB2023/050572
(87) International publication number: WO 2023/139561

(57) **Abstract**

The present invention consists of a method and apparatus for the application of particle size-controlled liquid coatings on sheets of varying geometries, which are stacked and compacted. Such coatings can be adhesives, accelerators, insulators or thermal barriers. The method and apparatus allows the size of the particles in suspension of the coating to be measured for each application, in order to control the quantity used.

## Description

### TECHNICAL FIELD

The present invention relates to the field of manufacturing laminated cores for electric motors, specifically a method and apparatus for applying particle size-controlled liquid coatings, such as adhesives, accelerators, insulators or thermal barriers, onto laminated sheets of varying geometries, which are stacked and compacted.

### KNOWN BACKGROUND

The present method and apparatus relates to the manufacture of laminated cores for electric motors, which are formed from laminated magnetic sheets and stacked in a cylinder or ring shape to form the rotors and stators. Said laminated sheets must be bonded together, for example by using adhesive coatings, so that the magnetic properties of the material are preserved, while increasing the insulation between sheets and the strength of the core.

Said adhesive coatings are applied to one or both surfaces of the laminated sheets and take up space within the stack of laminated sheets.

It is known in the state of the art that the stacking factor is the ratio of the effective cross-sectional area of the rotor or stator core, to the total physical cross-sectional area of the core, taking into account that the adhesive covers a finite space, so that the effective area occupied by the flux is smaller than the total physical area of the core.

The stacking factor is indicative of the ability of the laminated motor core to carry the electric flux. This depends to a large extent on the manufacturing process of the core, e.g. the pressure applied to the laminates, their thickness, as well as the method used to join them and prevent the laminates from coming into contact with each other. It can be calculated from the weight, volume and density of the laminated stack material.

Laminated cores always have a stacking factor of less than one, as a stacking factor of 1 implies that there are no laminates at all. Stator cores usually have stacking factors close to 0.95, but cores made of amorphous metal have factors of around 0.8, whereas the stacking factor of silicon steel is usually 0.96, but it also depends on the other core components. It is possible to reduce the space taken up by the adhesive coatings that bind the laminates of the electrical cores together, but this may weaken the bond strength between the laminates, if the amount of adhesive coating used is reduced too much.

As well as this, the measurement of the amount of coating used in these processes is based on the knowledge of the material used and the number of parts processed. The quantity of material used is commonly divided by the number of coated parts to obtain the quantity used per part. However, this method is inaccurate. The present method and apparatus solves these problems.

The adhesive for forming the laminated core packs is often applied during the die-cutting process, as is the case in patents JP3822020 B2, CN101673986 B and JP4648765 B2, among others.

Patent MX375091B (also published as US9531223B2) describes a method for producing stacks of laminates with a controlled height, by applying adhesive and primer, on one or both sides of laminated sheets, in the form of small dots, drops or sprays, which are applied directly onto the laminates by means of application heads, dies, rollers, cylinders or pads, over a partial or total surface area, by means of a driver, based on the die-cutting stroke. Said method takes into account the total height of the laminate package, based on the number of sheets being compacted, but has no effect on the stacking rate, nor does it have the means to control the volume of glue used in each application.

The same applies to patents US10230291B2, US10720802B2, US2019322093A1, US8474129B2, EP3535836B1, FR3042923B1, US6301773B1.

Meanwhile, application US20160067728A1 describes a method for forming a layer of glue coating on a workpiece, which obtains data on the amount of glue used by measuring the weight of glue on the workpiece, allowing it to adjust the amount of glue sprayed in real time Said measurement also allows the thickness of the glue layer to be estimated. Said method measures the sprayed glue directly, once it is fixed on the part where it is applied.

Patent US 20050001869A1 uses a calibration surface to weigh the glue dots before applying them to a substrate at a given speed.

Patent US4361110A describes an apparatus and system for applying glue to a work surface that measures the light reflected from said work surface to determine the percentage of coating deposited. It measures light reflection on the coated surface and controls the amount of coating used.

Patent DE10048749A1 describes a robotic arrangement for applying glue to work surfaces, which obtains information by means of an image evaluation unit with several digital cameras aimed at the coated surface, configured as infrared cameras. Said unit produces information to compare the result in relation to a theoretical value, to regulate the amount of glue sprayed directly on the workpiece. Evaluate images of the sprayed surface.

Another patent that also measures the amount of glue or viscous liquids sprayed on a work surface is US20020151042A1.

Some adhesive coatings are used in combination with accelerators or thinners, in order to modify their behaviour, or combine two or more adhesives with different cure times and bond strengths. The present invention proposes a different way of measuring the glue used.

### BRIEF DESCRIPTION OF THE DRAWINGS

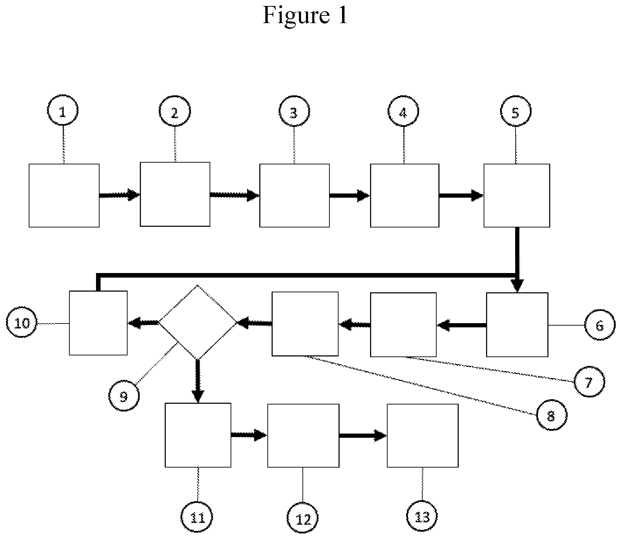

Figure 1. Schematic representation of the process.

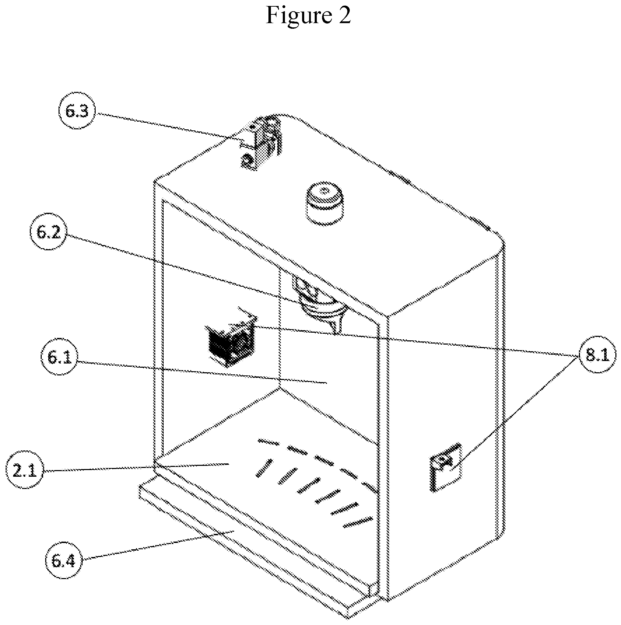

Figure 2. Isometric view of the apparatus with the lid open.

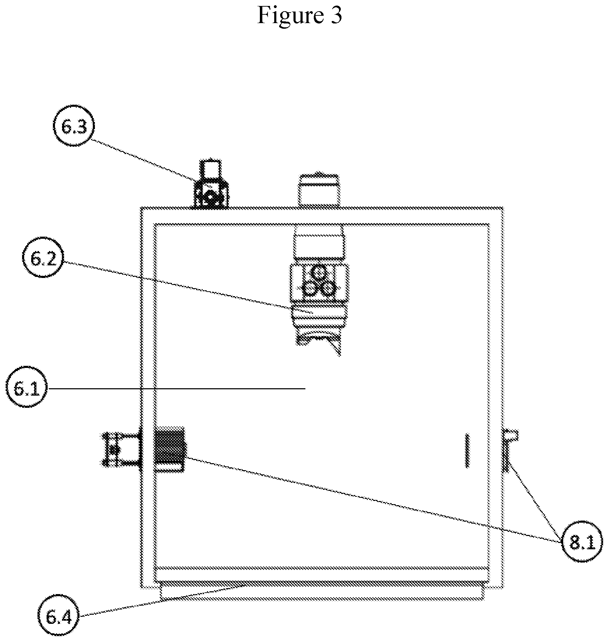

Figure 3. Front view of the apparatus.
Figure 4. Use of the apparatus in combination with a die-cutting press.
Figure 5. Use of the apparatus at a workstation.

### DETAILED DESCRIPTION

The present invention consists of a method and apparatus for the application of particle size-controlled liquid coatings, such as adhesives, accelerators, insulators or barriers, on laminated sheets of varying geometries, which are stacked and compacted. This method and apparatus allows the size of the particles in the coating suspension to be measured for each application, in order to control the quantity used and measure the efficiency. It can measure and control the amount of coating used, with fluids with viscosities anywhere between 100 and 3,500 centipoises.

The method for applying particle size-controlled liquid coatings on laminated sheets of variable geometries comprises the following steps: using as the supply material (1.1) continuous laminated strips, and/or single laminated sheets of variable geometries, and/or stacked laminated sheet packs of variable geometries (1); selecting and placing at least one coating pattern delimiting mask (2.1) according to the geometry of the parts to be obtained, or the geometry of the supply material (2); setting the operating parameters associated with the selected coating pattern delimiting mask (2.1) (3); locating the supply material (1.1) in a predetermined position to receive the coating (4); locating at least one particle generating chamber (6.1) in an application position (5); pressurising the particle generating chamber (6); generating a particle size of the suspended liquid coating (7); measuring the particle size of the suspended liquid coating (8); determining whether the particle size of the suspended liquid coating is within a set range (9); modifying the set particle size generation parameters of the suspended liquid coating, if necessary (10); releasing the pressure of the particle generating chamber to deposit this volume of suspended particles on any surface of the supply material (11); positioning the particle generating chamber (6.1) to allow displacement of the supply material (12); and displacing the coated supply material (13).

The supply material (1.1) can be provided (1) in the form of at least one continuous laminated strip, and/or as single laminated sheets of varying geometries, and/or as bundles of stacked laminated sheets. This can be done manually or automatically. The coating pattern delimiting mask (2.1) consists of a flat or volumetric part, which limits the area on which the liquid coating in suspension will be deposited on the surface of the supply material (1.1).

Said coating pattern delimiting mask (2.1) may be selected (2) from a number of different shaped masks, each suitable for one or more geometries of the parts to be obtained or of the supply material.

Said coating pattern delimiting mask (2.1) is placed at the end of the particle generating chamber (6.1) which will come into contact with the surface of the supply material to be coated by the suspended particles.

Both the selection and the positioning of the coating pattern delimiting mask (2.1) can be done manually or automatically. The selection and positioning of such a delimiting mask is carried out each time the geometry of the parts to be obtained, or the geometry of the supply material, changes.

The predetermined operating parameters that can be set (3) are: a) the internal pressure of the particle generating chamber, b) the pressure at which the liquid coating is inside the particle generating device (6.2), c) the ambient temperature; d) the opening time of the particle generating device (6.2), and e) a minimum and maximum range of the particle size in suspension, which is indicated as appropriate.

The operating parameters suitable for each geometry of the supply material (1.1), and which are associated with at least one coating pattern delimiting mask, are known on the basis of pre-production performance tests. Said parameters can be set manually or automatically and are stored in a control device (3.1).

The supply material (1.1), in the form of at least one continuous laminated strip, or as single laminated sheets or as bundles of laminated sheets, can be placed in the predetermined position to receive the coating (4) manually or automatically, by any means.

The particle generating chamber (6.1) is an enclosed space of any geometry and is pressurised to contain the coating particles suspended in air until they are applied.

To place the particle generating chamber in a position for application (5) it is necessary that the coating pattern delimiting mask (2.1) is in contact with the surface of the supply material to be coated. The location of the particle generating chamber (6.1) in an application position can be accomplished by any means, manually or automatically, and corresponds to any location that allows the mask to be in contact with the surface of the supply material (1.1) to be coated.

Pressurisation of the particle generating chamber (6.1) is accomplished by means of one or more pressurisation valves (6.3), which inject pressurised air into the particle generating chamber (6.1). The pressure reached inside the particle generating chamber (6.1) is preferably between 3 and 12 bar, and has the function of expelling the particle size of the liquid coating suspended in the air inside the particle generating chamber (6.1), to transfer and deposit them on any surface of the supply material (1.1). Said pressure is released through at least one application damper (6.4).

The particle generation of the suspended liquid coating (7) is carried out inside at least one particle generating chamber (6.1), by means of at least one valve (6.2), using set operating parameters, which can be automatically adjusted, if necessary, based on the measurement of the size of the suspended particles of the generated liquid coating (8).

The measurement of the airborne particle size of the generated liquid coating (8) is carried out inside the particle generation chamber (6.1) and is performed by at least one measuring device (8.1). Said measuring device estimates the equivalent average size of airborne particles by means of a laser light emitting lamp (8.2) which is directed towards a CCD sensor (8.3) that measures the scattering of the laser light reflected by the particles of the suspended liquid coating.

Said measurement is carried out at intervals and transmitted to a control device (8.1).

Said measurement serves as a basis for determining whether the particle size generated is within a set range (9), which corresponds to a minimum and a maximum suspended particle size that is indicated as acceptable.

If the suspended particle size measurement is within the set minimum and maximum range (9), the same operating parameters are maintained. If the measurement of the suspended particle size (8) is outside the set minimum and maximum range (9), a control device (3.1) adjusts the set operating parameters (3). Said adjustment is done automatically, according to pre-determined operations and selections.

Once the suspended particles have been measured, a control device (3.1) opens the application flap (6.4).

The application of the generated particles (11) is performed on a surface restricted by the selected coating pattern delimiting mask (2.1) and corresponds to any surface of the supply material.

When the pressure is released from the particle generating chamber (6.1) by opening at least one application hatch (6.4), the suspended liquid coating particles pass through the application hatch (6.4) as well as through the coating pattern delimiting mask (2.1) and are deposited on the exposed surface of the delivery material (1.1) in such a way that the rest of the surface of the delivery material (1.1) is not coated.

After the application of a given amount of particles of the liquid coating in suspension (11), the particle generation chamber is placed in a position (12) that allows the displacement of the delivery material (13).

The generation and application of suspended particles is performed indirectly and comprises: pressurising the particle generating chamber (6); generating particles from the suspended liquid coating (7) by releasing pressure from the particle generating chamber (11); measuring the particle size of the suspended liquid coating (8); and transferring and depositing the cloud of suspended micro particles onto the supply material (1.1) by contact or other means.

The described method may include one or more stages of particle generation and application, using the same type of coatings or different types of coatings, for example by adding more particle generating chambers.

The apparatus for particle size-controlled application of liquid coatings on laminated sheets of variable geometries comprises: at least one particle generation chamber (6.1), at least one coating pattern delimiting mask (2.1), at least one particle generating device (6.2), at least one particle size measurement device (8.1), at least one particle generating chamber pressure regulating valve (6.3), at least one application hatch (6.4), and at least one control device (3.1).

The particle generating chamber (6.1) comprises a confined space, of any geometry, which is at a pressure greater than atmospheric pressure, preferably between 3 and 12 bar, within which the liquid coating particles are held suspended in air. Said pressure is provided by at least one pressure regulating valve of the particle generating chamber (6.3), which injects pressurised air prior to particle generation.

Inside the particle generating chamber, (6.1) at least one particle generating device (6.2), a particle measuring device (8.1) and at least one application hatch (6.4) are located.

The particle generating device (6.2) is operated by a control valve (8.1) which determines the opening time. Said control valve (8.1) also regulates the pressure of the liquid coating inside the particle generating device (6.2) by means of a pump.

Said particle generating device (6.2) may be a pneumatic, ultrasonic or any other type of arrangement capable of handling fluids with viscosities in any range from 100 to 3,500 centipoises.

The combination of the opening time of the particle generating device and the pressure of the liquid coating allows the generation of specific particle sizes of the liquid coating inside the chamber (6.1), which remain suspended in the air.

Inside the particle generating chamber (6.1) there is also at least one suspended particle size measuring device (8.1), consisting of a laser light emitting lamp (8.2) which is directed towards a CCD sensor (8.3) that measures the scattering of the laser light which is reflected at certain angles depending on the particle size of the suspended liquid coating.

Said particle size measurement device (8.1) generates a signal which is sent to the control device (3.1) to compare the received measurement with the set operating parameters, specifically with a minimum and maximum range of the particle size in suspension, which is indicated as suitable for the application.

If the suspended particle size measurement is within a set range, the same operating parameters are maintained. Otherwise, the necessary adjustments are made automatically.

A particle size in suspension larger than the set size causes waste of the liquid coating and increases the space it occupies within the stack of rolled sheets. Less than the stated amount of suspended particles decreases the bond strength of an adhesive coating.

Once the suspended particle size has been measured, at least one application flap (6.4) opens, releasing the pressure and allowing the suspended liquid coating particles to pass through and move towards the coating pattern delimiting mask (2.1). Said application hatch (6.4) remains closed at all times and is opened only for particulate application (11).

The measurement of the suspended particle size makes it possible to keep the application of suspended particles within the set operating range and to adjust the operating parameters immediately by means of the control device (8.1).

The coating pattern delimiting mask (2.1) exposes the area where the coating particles are to be applied, according to the specific geometry of the delivery material (1.1). The size and shape of the uncovered area of the coating pattern delimiting mask (2.1) influence the operating parameters.

The coating pattern delimiting mask (2.1) must be in contact with the surface of the supply material (1.1) to be coated, in order to deposit on the surface (1.1) the particle size of the coating in suspension in the chamber (6.1).

Therefore, the generation and application of the liquid coating is done indirectly: it starts inside the pressurised particle generator chamber that keeps the particles momentarily suspended in the air (6.1), passes through the application hatch (6.4) and the coating pattern is defined by the delimiting mask (2.1) on the supply material (1.1).

Once the coating has been applied to any surface of the delivery material (1.1), the particle generating chamber (6.1) is placed in a position that allows the delivery material to move. The location of the particle generating chamber (6.1) in a position that allows the delivery material (1.1) to be moved to a position other than the application position can be accomplished by any means, manually or automatically, and corresponds to any location that allows the delivery material (1.1) to be moved to a position other than the application position.

### BEST WAY FORWARD

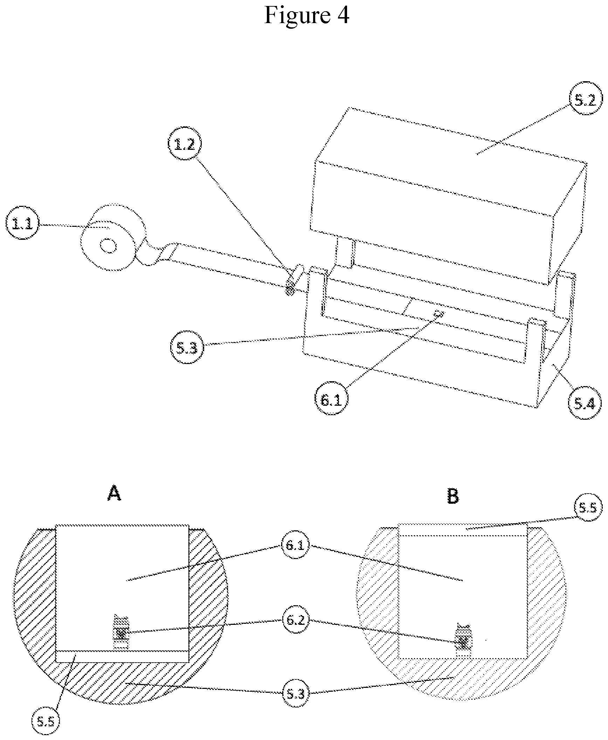

The method and apparatus of the present invention can be used in combination with a die-cutting press (5.4), as shown in Figure 4. In this method, a continuous strip of laminated magnetic material is used as the supply material (1.1) and fed into the die-cutting press.

The particle generating chamber (6.1) is housed inside the die on the punch side when the application is from top to bottom (5.2) or on the die side when the application is from bottom to top (5.3).

At least one coating pattern delimiting mask (2.1) is selected and positioned according to the geometry of the parts to be die-cut (2).

The coating pattern delimiting mask (2.1) is positioned at the same level as the surface of the punch (5.2) or die (5.3) and comes into contact with the supply material (1.1) at the same time as the punch (5.2) or die (5.3).

The operating parameters associated with the selected coating pattern delimiting mask (2.1) are set (3).

In this embodiment, the operating parameters are set (3) are: a) an internal pressure of the particle generating chamber preferably from 3 to 12 bar, b) a pressure at which the liquid coating is inside the particle generating device (6.2) preferably from 3 to 12 bar, c) the ambient temperature, d) the opening time of the particle generating device (6.2), and e) a minimum and maximum range of the suspended particle size. The latter two will depend on the geometry of the parts to be die-cut. The control system will compensate for extreme temperature changes.

The supply material (1.1) is placed in the predetermined position to receive the coating (4) automatically, by means of the rollers (1.2) which align the laminated strip inside the die cutting press and advance it to different positions.

The press is responsible for shaping the lamination and locates at least one particle generating chamber (6.1) at the application position (5) and in a position that allows for the displacement of the supplied material (12).

When the particle generating chamber (6.1) is located within the matrix (5.3), the movement to position the chamber is small and is performed within the matrix (5.3) itself, as shown in Figure 4 A and B, where a space (5.5) below the particle generating chamber (6.1) when in an application position (5), and a space (5.5) above the particle generating chamber (6.1) when in a position that allows the displacement (12) of the supplied material (1.1).

When the particle generating chamber (6.1) is on the side of the punch (5.2), the movement to position the particle generating chamber (6.1) is provided by the press, as part of the upward and downward movement of the punch (5.2), which contacts the supply material (1.1), in an application position, when descending, and is positioned to allow movement (12) of the supply material (1.1) when ascending.

The speed of the press is related to the speed of particle generation and application, which comprises pressurising the particle generating chamber (6); generating a particle size of the suspended liquid coating (7); measuring the particle size of the suspended liquid coating (8); and transferring the cloud of suspended micro particles onto the supply material (1.1) by releasing the pressure from the particle generating chamber (11).

In a common press, it is expected to operate within a range of 120 to 200 strokes per minute. If the particle size measurement of the generated liquid coating is outside the set range (9); the control system (3.1) automatically modifies the set parameters (10).

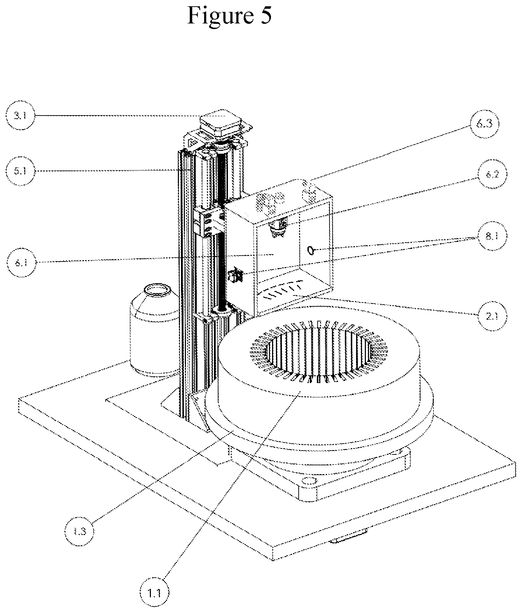

The method and apparatus of the present invention can also be used to form manual, semi-manual or automatic workstations, such as the one shown in Figure 5. In this mode, single laminated sheets of variable geometries and/or stacked laminated sheet packs of variable geometries (1) are used as the supply material (1.1).

The particle generating chamber (6.1) is positioned above the supply material (1.1) by means of a support (5.1) and a linear actuator that allows it to be raised or lowered.

At least one coating pattern delimiting mask (2.1) is selected and positioned (2) according to the geometry of the loose laminated sheets and/or stacked laminated sheet packs (1.1). In this method, the coating pattern delimiting mask (2.1) is placed in the lower part of the particle generating chamber (6.1). The operating parameters associated with the selected coating pattern delimiting mask (2.1) are set (3).

In this method, the operating parameters to be set (3) are: a) an internal pressure of the particle generating chamber preferably from 3 to 12 bar, b) a pressure at which the liquid coating is located inside the particle generating device (6.2), preferably from 3 to 12 bar, c) the ambient temperature, d) the opening time of the particle generating device (6.2), and e) a minimum and maximum range of particle size, depending on the geometry of the parts to be die-cut. The control system will compensate for extreme temperature changes.

The supply material (1.1) is positioned manually or automatically (4), on an alignment device (1.3) where single laminated sheets and/or bundles of laminated sheets are stacked. This alignment device (1.3) determines the position for receiving the coating (4).

The particle generating chamber is lowered to an application position (5), where the coating pattern delimiting mask (2.1) is in contact with the opposite surface of the particle generating chamber of the supply material (1.1).

Particle generation and application comprises pressurising the particle generating chamber (6); generating a particle size of the suspended liquid coating (7); measuring the particle size of the suspended liquid coating (8); and transferring the suspended microparticle cloud onto the supply material (1.1) by releasing the pressure in the particle generating chamber (11), opening the application hatch (6.4).

If the particle size measurement of the generated liquid coating is outside the set range (9); the control system (3.1) automatically modifies the set parameters (10).

The particle generating chamber (6.1) rises to a position that allows displacement of the supply material (12) and then moves the coated supply material (1.1) (13). This displacement can be carried out by any means, manually or automatically.

On a semi-automatic workstation, 4 loose rolled sheets of variable geometries are to be coated per minute.

## Claims

1. A method for applying particle size controlled liquid coatings to laminated sheets of varying geometries, comprising:
Using continuous laminated strips, and/or single laminated sheets of variable geometries, and/or stacked laminated sheet packs of variable geometries (1) as supply material;
Selecting and placing at least one mask to delimit the coating pattern according to the geometry of the parts to be obtained, or the geometry of the supply material (2);
Setting the operating parameters associated with the selected coating pattern delimiting mask (3);
Placing the supply material in a predetermined position to receive the coating (4);
Locating at least one particle generating chamber at an application position (5);
Pressurising the particle generating chamber (6);
Generating a particle size of the suspended liquid coating (7);
Measuring the particle size of the suspended liquid coating (8);
Determining whether the particle size of the liquid coating in suspension is within an established range (9);
Modifying the established particle size generation parameters of the suspended liquid coating, if necessary (10);
Releasing pressure from the particle generating chamber to deposit this particle size in suspension on any surface of the supply material via contact or other means (11);
Locating the particle generating chamber in a position that allows displacement of the supply material (12); and
Moving the coated supply material (13).

2. The method according to claim 1, **characterised in that** the selection of at least one coating pattern delimiting mask can be made from a number of masks with different geometries.

3. The method according to claim 2, **characterised in that** the geometry of said coating pattern delimiting masks may be planar or have volume.

4. The method according to claim 2, **characterised in that** said selection of at least one coating pattern delimiting mask can be performed manually.

5. The method according to claim 2, **characterised in that** said selection of at least one coating pattern delimiting mask can be performed automatically.

6. The method according to claim 1, **characterised in that** the generation of suspended particles of the liquid coating is carried out within a pressurised chamber.

7. The method according to claim 6, **characterised in that** said pressurised chamber can have any geometry.

8. The method according to claim 6, **characterised in that** upon releasing the pressure from said pressurised chamber the liquid coating particles in suspension are produced.

9. The method according to claim 6, **characterised in that** within said pressurised chamber additionally the particle size of suspended liquid coating particles is measured.

10. The method according to claim 9, **characterised in that** said measurement generates a signal that feeds back to at least one control system to maintain the suspended particle size within a pre-set range.

11. The method according to claim 1, **characterised in that** it can use as a coating, liquid substances such as adhesives, accelerators or initiators, organic materials, metallic materials, insulating materials, thermal barriers or resins.

12. The method according to claim 11, **characterised in that** said liquid substances have viscosities in any range between 100 and 3,500 centipoises.

13. The method according to claim 1, **characterised in that** it can include more than one stages of particle generation and application, using the same type of coatings or different types of coatings.

14. An apparatus for applying particle size-controlled liquid coatings to laminated sheets of varying geometries, comprising:
At least one particle generating chamber (6.1);
At least one coating pattern delimiting mask (2.1);
At least one particle generating device (6.2);
At least one suspended particle size measuring device (8.1);
At least one particle generating chamber pressure regulating valve (6.3);
At least one application hatch (6.4); and
At least one control device (3.1).

15. The apparatus according to claim 14, **characterised in that** the particle generating chamber comprises a confined, pressurised space.

16. The apparatus according to claim 15, **characterised in that** said pressurised chamber can have any geometry.

17. The apparatus according to claim 14, **characterised in that** the generation of suspended particles of the liquid coating is carried out within the particle generating chamber.

18. The apparatus according to claim 17, **characterised in that** said generation of suspended particles of the liquid coating is performed when the particle generating chamber is pressurised.

19. The apparatus according to claim 18, **characterised in that** upon releasing the pressure from said pressurised chamber the suspended particles of the liquid coating are deposited to any surface of the supply material.

20. The apparatus according to claim 14, **characterised in that** it measures the particle size of the liquid coating in suspension within the pressurised chamber.

21. The apparatus according to claim 20, **characterised in that** said measurement generates a signal that feeds back to at least one control system.

22. The apparatus according to claim 21, **characterised in that** a control system automatically modifies the operating parameters to maintain the suspended particle size within a pre-set range.

23. The apparatus according to claim 14, **characterised in that** it can use as a coating, liquid substances such as adhesives, accelerators or initiators, organic materials, metallic materials, insulating materials, thermal barriers or resins.

24. The apparatus according to claim 23, **characterised in that** said liquid substances have viscosities in any range between 100 and 3,500 centipoises.

25. The apparatus according to claim 14, **characterised in that** it can be used in combination with a die-cutting press.

26. The apparatus according to claim 14, **characterised in that** it can be used to form manual, semi-manual or automatic workstations.
